# FASCICULE DE BREVET EUROPEEN

(11) **EP 0 648 642 B1**
(45) Date de publication et mention de la délivrance du brevet: **29.07.1998**
(21) Numéro de dépôt: 94402290.4
(22) Date de dépôt: 12.10.1994
(51) Int. Cl.: B60Q 1/30

(54) **Feu de signalisation à optique réglable notamment pour lunette arrière de véhicule automobile**
Hochgesetzte Leuchte mit regelbarem Optikelement für Fahrzeuge
Center high mounted light for vehicle with adjustable optical element

(30) Priorité: 15.10.1993 FR 9312277
(43) Date de publication de la demande: 19.04.1995
(73) Titulaire: VALEO VISION, 93000 Bobigny (FR)
(72) Inventeur: Lau, Francis, F-81290 Labruguiere (FR); Andrieu, Michel, F-81660 Pont de l'Arn (FR)
(74) Mandataire: Martin, Jean-Jacques

(56) Documents cités:
- DE-U- 8 910 909
- US-A- 3 124 309
- US-A- 4 654 757

## Description

La présente invention concerne d'une façon générale un feu de signalisation à optique réglable notamment pour lunette arrière de véhicule automobile.

Il est maintenant classique d'équiper un véhicule, soit en usine, soit ultérieurement, de feux de signalisation arrière surélevés, tout particulièrement de feux stop, que l'on place notamment a l'intérieur de l'habitacle du véhicule au voisinage de sa lunette arrière.

De tels feux ont pour objet de mieux signaler aux conducteurs des véhicules qui suivent un freinage du véhicule. Ils sont soit fixés sur la plage arrière, soit fixés, généralement collés, directement sur la lunette arrière.

Les véhicules sur le marché présentent généralement des inclinaisons de lunette arrière qui varient dans une large gamme. Ainsi, pour qu'il puisse respecter une photométrie imposée notamment par les règlements, l'optique d'un feu de lunette arrière doit être conçue en fonction de l'inclinaison de la lunette arrière du véhicule sur lequel on souhaite monter le feu.

Dans le cas de la commercialisation de feux de lunette arrière en post-équipement, il est donc nécessaire de proposer à l'acheteur des feux adaptés à son véhicule, ce qui est bien entendu extrêmement lourd à gérer.

Une solution connue à ce problème consiste à proposer un feu de lunette arrière en association avec un nombre limité de dispositifs intermédiaires de fixation sur lunette, appelés "visières", qui sont adaptés à un même nombre limité d'inclinaisons de lunettes, par exemple à deux ou trois inclinaisons différant de 10° les unes par rapport aux autres.

Ceci ne constitue cependant qu'un compromis, et au surplus le feu est plus coûteux pour le consommateur.

Une autre solution connue à ce problème est enseignée par FR-A-2 587 446 et US-A-4 654 757, qui décrivent des feux conformes au préambule de la revendication 1. Cette solution consiste à prévoir, entre un boîtier portant la visière du feu et un boîtier d'optique, des pattes de solidarisation coopérant avec des crantages permettant de faire varier l'orientation mutuelle de ces deux parties.

Cette solution présente également des inconvénients. En particulier, ce feu connu comprend deux boîtiers, à savoir celui portant la visière et celui de l'optique (lampe et glace, et éventuellement miroir), l'articulation opérant entre les deux boîtiers.

Il en résulte que le feu est coûteux et d'assemblage fastidieux.

La présente invention vise à proposer un feu de signalisation notamment de lunette arrière ou de plage arrière qui, bien que d'un modèle unique, puisse être extrêmement aisément adapté à des géométries de lunettes ou de plages arrière différentes, et engendrer un faisceau dont la photométrie soit correcte, sans avoir les défauts précités, et en particulier en étant plus simple et économique que le feu connu par FR-A-2 587 446 et US-A-4 654 757.

A cet effet, la présente invention concerne un feu de signalisation arrière tel que défini dans la revendication 1.

Des aspects préférés, mais non limitatifs, du feu de signalisation de la présente invention sont définis dans les sous-revendications.

D'autres aspects, buts et avantages de la présente invention apparaîtront mieux à la lecture de la description détaillée suivante de formes de réalisation préférées de celle-ci, donnée à titre d'exemple non limitatif et faite en référence au dessin annexé, sur lequel :
la figure 1 est une vue de face et en coupe partielle d'un feu de lunette arrière selon la présente invention,
la figure 2 est une vue de dessus et en coupe partielle du feu de la figure 1, prise selon la ligne II-II de la figure 3,
la figure 3 est une vue de côté et en coupe partielle du feu des figures 1 et 2, prise selon la ligne III-III de la figure 2,
la figure 4 est une vue de côté et en coupe partielle du feu des figures 1 et 2, prise selon la ligne IV-IV de la figure 2, et
les figures 5a et 5b sont des vues de côté et en coupe partielle du feu des figures 1 à 4, monté sur deux lunettes arrière d'inclinaisons différentes.

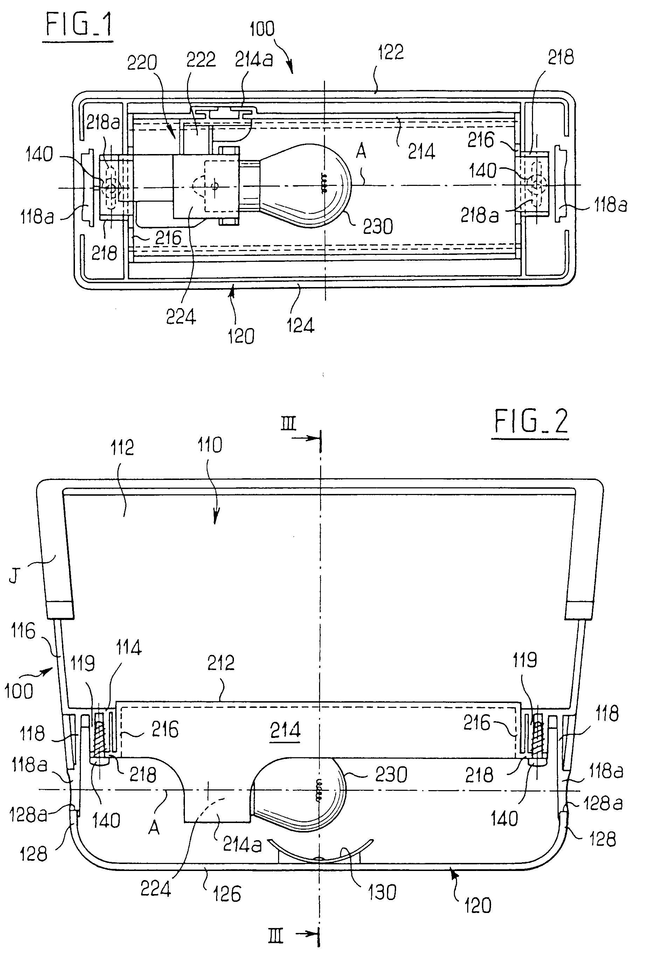

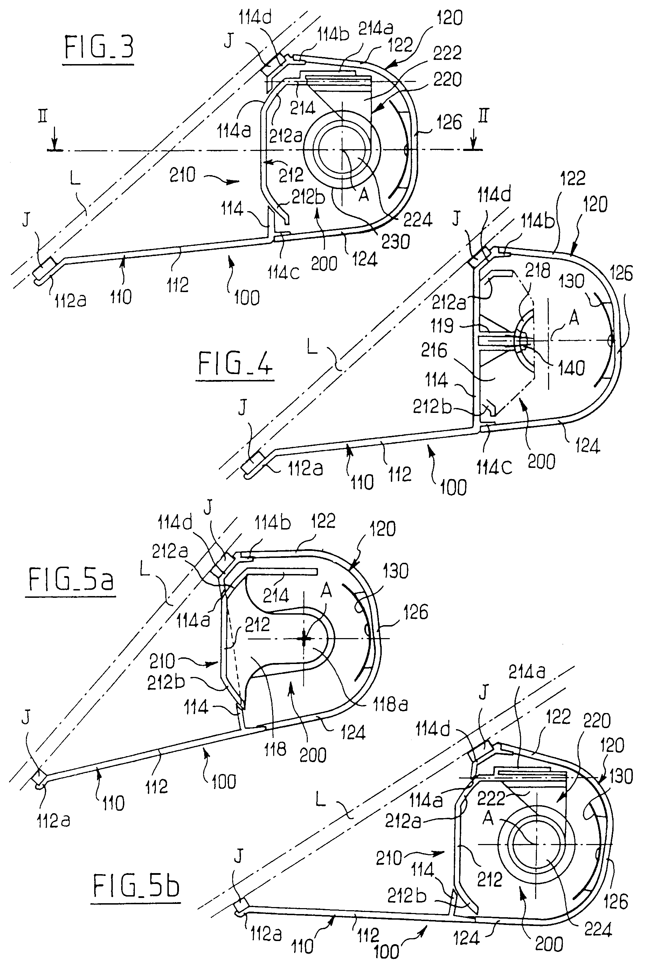

On notera préliminairement que, d'une façon générale, les termes "avant", "arrière" et analogues seront compris par rapport à la direction d'émission de la lumière par le feu, à savoir avant vers le haut et arrière vers le bas sur la figure 2, et avant vers la gauche et arrière vers la droite sur les figures 3, 4, 5a et 5b.

En référence aux dessins, on a représenté un feu de signalisation arrière, notamment un feu stop, destiné à être monté de façon surélevée contre la face intérieure d'une lunette arrière L d'un véhicule automobile.

Le feu comprend deux parties principales, à savoir une partie 100 de montage du feu sur la lunette, formant une visière et un boîtier d'optique solidaires l'un de l'autre, et une partie optique 200 montée dans le boîtier d'optique.

La partie de montage 100 comprend une première pièce 110, par exemple en matière plastique injectée, de section en forme générale de L avec une paroi généralement horizontale inférieure 112 dont un bord libre tourné vers la lunette comprend un rebord oblique 112a, une paroi généralement verticale 114 s'étendant vers le haut à partir du bord de la paroi 112 opposé au rebord 112a, et deux parois latérales 116 de forme générale triangulaire.

La paroi 114 comporte centralement une ouverture généralement rectangulaire de grandes dimensions, notée 114a.

Dans les régions de bords supérieur et inférieur de la paroi 114 font saillie vers l'arrière deux nervures de calage, respectivement 114b, 114c.

Au dessus de l'ouverture 114a, une paroi oblique 114d, située approximativement dans l'alignement du rebord libre 112a, forme une transition entre la paroi 114 et la nervure arrière 114b.

Les parois latérales 116 présentent des rebords (non illustrés) qui définissent avec le rebord 112a et la paroi 114d une surface d'appui pour un joint adhésif J assurant la solidarisation entre cette surface et la lunette arrière L du véhicule.

La pièce 110 comporte en outre, en saillie vers l'arrière à partir de la région des bords latéraux de la paroi 114, deux pattes flexibles de fixation 118 comportant chacune dans la région de leur extrémité libre une protubérance latérale 118a, à des fins expliquées plus loin.

A proximité de ces pattes et vers l'intérieur par rapport à celles-ci, s'étendent également vers l'arrière deux fûts taraudés 119 pour des vis.

Sur l'arrière de la partie 110 est fixé par clipsage une pièce 120 formant boîtier d'optique, de section verticale en forme générale de U, avec une branche supérieure 122, une branche inférieure 124, un fond 126 et deux parois latérales terminales 128. Le clipsage est effectué à l'aide des pattes flexibles 118 dont les protubérances 118a, après effacement desdites pattes vers l'intérieur au cours du rapprochement des pièces 110, 120, s'engagent élastiquement dans des ouvertures 128a complémentaires formées dans les parois latérales 128.

La partie 120 est calée sur l'arrière de la partie 110 grâce à une complémentarité de formes appropriée au niveau des nervures 114b, 114c.

Au niveau de son fond 126, le boîtier 120 reçoit intérieurement un récupérateur de flux lumineux 130 constitué en l'espèce d'un miroir sphérique (ou en variante cylindrique) aluminié. Le centre de coubure du miroir 130 est situé sur un axe transversal A.

Le feu comprend en outre un ensemble optique 200 qui comprend une pièce d'armature 210 dont une paroi avant principale 212 définit une glace comportant des aménagements optiques (lentilles de Fresnel, stries, billes, etc...) destinés par réfraction à traiter un faisceau lumineux, notamment à le concentrer suivant un axe optique x-x par exemple horizontal ou faisant avec l'horizontale un petit angle déterminé. Cette paroi 212 se termine en haut et en bas par deux parties arquées, respectivement 212a, 212b, centrées sur l'axe A, et dont les surfaces extérieures s'étendent à proximité des bords de l'ouverture 114a de la pièce 110.

La pièce 110 comporte en outre une paroi supérieure 214 essentiellement horizontale, qui se raccorde à la partie arquée 212a. Cette paroi est aménagée en 214a pour recevoir un support de lampe 220 qui comprend une membrure descendante 222 à l'extrémité inférieure de laquelle est prévue une douille 224 pour une lampe 230. La douille et la lampe sont centrées sur l'axe A.

La pièce 210 comporte deux parois latérales 216 à partir desquelles font saillie vers l'extérieur deux membrures 218 de profil semi-circulaire, dans lesquelles sont formées respectivement deux fentes verticales 218a.

Le profil des membrures est centré sur l'axe A.

Des vis 140 comportant chacune une tête sont engagées dans les fentes 218a et vissées dans les fûts taraudés 119 de la pièce 110.

De la sorte, on réalise un montage de la pièce 210 sur la pièce 110 de façon réglable angulairement autour de l'axe A. Plus précisément, en dévissant légèrement les vis 140, on peut librement faire tourner la pièce 210 portant à la fois la glace (paroi 212) et la source (lampe 230) du feu de signalisation autour de l'axe A, et ce de façon continue. Il est à noter qu'au cours d'un tel réglage, le filament de la lampe 230 reste en permanence situé au centre de courbure du miroir 130, qui reste fixe, si bien que le rôle de récupérateur de flux de ce miroir est rempli quelle que soit l'orientation donnée à la pièce 210.

Ce réglage de la pièce 210 permet d'ajuster en continu l'orientation du faisceau stop engendré sur la verticale en s'affranchissant de l'orientation de la lunette arrière du véhicule.

Ainsi le feu de lunette arrière de la présente invention est universellement adaptable à tous les types de véhicules.

Ainsi la figure 5a illustre le feu monté sur une lunette arrière L inclinée à environ 45° par rapport à la verticale, et la pièce 210 réglée dans une position légèrement montante par rapport à la direction générale des pièces 110, 120. Au contraire, la figure 5b montre le feu monté sur une lunette arrière L inclinée à environ 60° par rapport à la verticale, et la pièce 210 réglée dans une position légèrement descentante par rapport à la direction générale des pièces 110, 120.

En variante, on peut substituer au réglage continu d'orientation décrit plus haut un réglage par positions discrètes, par crantages ou analogues, pour autant que le pas de ces crantages soit suffisamment fin pour obtenir dans toutes les situations un réglage satisfaisant.

## Revendications

1. Feu de signalisation arrière pour véhicule automobile, du type comprenant un boîtier (110, 120) comprenant une partie (110) de montage sur un élément (L) du véhicule dont l'inclinaison varie d'un véhicule à l'autre, un ensemble pivotant (210) articulé dans le boîtier de façon réglable autour d'un axe (A), comprenant une lampe (230) et une glace (212) de traitement de la lumière produite par la lampe, le réglage de l'ensemble pivotant permettant de compenser les variations d'inclinaison dudit élément (L) du véhicule et d'émettre un faisceau de direction générale imposée, caractérisé en ce que l'ensemble pivotant est dépourvu de boîtier et en ce que la lampe (230) est montée dans un espace défini conjointement par ledit ensemble pivotant et par ledit boîtier.

2. Feu de signalisation selon la revendication 1, caractérisé en ce qu'il comprend en outre un miroir (130) de récupération de flux et en ce que le miroir (130) est monté fixe sur ledit boîtier (120).

3. Feu de signalisation selon la revendication 2, caractérisé en ce que le miroir (130) présente un centre de courbure situé sur ledit axe (A).

4. Feu de signalisation selon la revendication 1, 2 ou 3, caractérisé en ce que ledit élément pivotant (210) est monté de façon continûment réglable dans le boîtier.

5. Feu de signalisation selon l'une des revendications 1 à 4, caractérisé en ce que l'élément du véhicule consiste dans la lunette arrière (L) de celui-ci et en ce que ledit axe (A) est horizontal.

6. Feu de signalisation selon la revendication 5, caractérisé en ce que la lampe (230) est montée de façon alignée et centrée sur ledit axe (A).

7. Feu de signalisation selon la revendication 6, caractérisé en ce que le boîtier comprend une première partie (110) formant visière, constituant ladite partie de montage sur la lunette arrière (L), et une deuxième partie (120) recevant la lampe (230) et l'élément pivotant (210), en ce qu'une cloison (114) est prévue entre les deux parties et comporte une ouverture (114a), et en ce que ledit élément pivotant (210) est monté au droit de ladite ouverture et engagé partiellement dans celle-ci au niveau de la glace (212).

8. Feu de signalisation selon la revendication 7, caractérisé en ce que l'élément pivotant (210) est monté sur ladite première partie (110) du boîtier et comporte deux membrures latérales (218) de profil circulaire dans lesquelles sont ménagées respectivement deux fentes verticales (218a), ladite première partie (110) du boîtier comportant des aménagements (119) pour le vissage de vis à tête (140) traversant lesdites fentes, pour ainsi réaliser sélectivement le blocage desdites membrures entre les têtes de vis respectives et lesdits aménagements dans la position angulaire souhaitée.

9. Feu de signalisation selon la revendication 8, caractérisé en ce que lesdits membrures en forme d'arcs de cercles (218) sont centrées sur ledit axe (A).

10. Feu de signalisation selon l'une des revendications 7 à 9, caractérisé en ce que ladite glace (212) est prévue entre deux parties arquées (212a, 212b) de l'élément pivotant (210), centrées sur ledit axe et s'étendant horizontalement à proximité de bords rectilignes supérieur et inférieur de ladite ouverture (114a) de la cloison (114).

## Claims

1. Rear indicator light for a motor vehicle, of the type comprising a housing (110, 120) comprising a part (110) for mounting on an element (L) of the vehicle whose inclination varies from one vehicle to another, a pivoting assembly (210) articulated in the housing so as to be adjustable about an axis (A), comprising a lamp (230) and a glass (212) for processing the light produced by the lamp, the adjustment of the pivoting assembly making it possible to compensate for variations in inclination of the said element (L) of the vehicle and to emit a beam with an imposed general direction, characterised in that the pivoting assembly has no housing and in that the lamp (230) is mounted in a space defined conjointly by the said pivoting assembly and the said housing.

2. Indicator light according to Claim 1, characterised in that it also comprises a flux recuperation mirror (130) and in that the mirror (130) is mounted fixed on the said housing (120).

3. Indicator light according to Claim 2, characterised in that the mirror (130) has a centre of curvature situated on the said axis (a).

4. Indicator light according to Claim 1, 2 or 3, characterised in that the said pivoting element (210) is mounted so as to be continuously adjustable in the housing.

5. Indicator light according to one of Claims 1 to 4, characterised in that the element of the vehicle consists of the rear window (L) of the latter and in that the said axis (A) is horizontal.

6. Indicator light according to Claim 5, characterised in that the lamp (230) is mounted so as to be aligned and centred on the said axis (A).

7. Indicator light according to Claim 6, characterised in that the housing comprises a first part (110) forming a visor, constituting the said part for mounting on the rear window (L), and a second part (120) receiving a lamp (230) and the pivoting element (210), in that a partition (114) is provided between the two parts and has an opening (114a), and in that the said pivoting element (210) is mounted in line with the said opening and engaged partially therein at the level of the glass (212).

8. Indicator light according to Claim 7, characterised in that the pivoting element (210) is mounted on the said first part (110) of the housing and has two lateral members (218) of circular profile in which two vertical slots (218a) are respectively formed, the said first part (110) of the housing having arrangements (119) for screwing cap screws (140) passing through the said slots, in order thus to achieve selectively the locking of the said members between the respective screw heads and the said arrangements in the desired angular position.

9. Indicator light according to Claim 8, characterised in that the said members in the shape of arcs of a circle (218) are centred on the said axis (A).

10. Indicator light according to one of Claims 7 to 9, characterised in that the said glass (212) is provided between two arched parts (212a, 212b) of the pivoting element (210), centred on the said axis and extending horizontally close to top and bottom rectilinear edges of the said opening (114a) in the partition (114).

## Patentansprüche

1. Hecksignalleuchte für Kraftfahrzeuge, umfassend ein Gehäuse (110, 120) mit einem Montageteil (110) für die Anbringung an einem Element (L) des Fahrzeugs, dessen Neigung sich von einem Fahrzeug zum anderen unterscheidet, eine Schwenkeinheit (210), die im Gehäuse verstellbar um eine Achse (A) angelenkt ist, mit einer Lampe (230) und einer Abdeckscheibe (212) zur Behandlung des durch die Lampe erzeugten Lichts, wobei die Verstellung der Schwenkeinheit den Ausgleich der Neigungsänderungen des besagten Elements (L) des Fahrzeugs und die Abstrahlung eines Lichtbündels mit einer vorgegebenen Gesamtrichtung ermöglicht , **dadurch gekennzeichnet,** daß die Schwenkeinheit ohne Gehäuse ausgeführt ist und daß die Lampe (230) in einem Zwischenraum eingebaut ist, der gemeinsam durch die besagte Schwenkeinheit und durch das besagte Gehäuse definiert wird.

2. Signalleuchte nach Anspruch 1, **dadurch gekennzeichnet,** daß sie außerdem einen Spiegel (130) zum Auffangen des Lichtstroms umfaßt und daß der Spiegel (130) fest an dem besagten Gehäuse (120) angebracht ist.

3. Signalleuchte nach Anspruch 2, **dadurch gekennzeichnet,** daß der Spiegel (130) einen Krümmungsmittelpunkt aufweist, der auf der besagten Achse (A) angeordnet ist.

4. Signalleuchte nach Anspruch 1, 2 oder 3 , **dadurch gekennzeichnet,** daß das besagte Schwenkelement (210) kontinuierlich verstellbar im Gehäuse gelagert ist.

5. Signalleuchte nach einem der Ansprüche 1 bis 4, **dadurch gekennzeichnet,** daß das Element des Fahrzeugs aus dessen Heckscheibe (L) besteht und daß die besagte Achse (A) horizontal verläuft.

6. Signalleuchte nach Anspruch 5, **dadurch gekennzeichnet,** daß die Lampe (230) fluchtrecht und auf die besagte Achse (A) zentriert eingebaut ist.

7. Signalleuchte nach Anspruch 6, **dadurch gekennzeichnet,** daß das Gehäuse einen als Blende ausgebildeten ersten Teil (110), der den besagten Montageteil für die Anbringung an der Heckscheibe (L) bildet, und einen zweiten Teil (120) umfaßt, der die Lampe (230) und das Schwenkelement (210) aufnimmt, daß eine Trennwand (114) zwischen den beiden Teilen vorgesehen ist und eine Öffnung (114a) enthält und daß das besagte Schwenkelement (210) in Höhe der besagten Öffnung angebracht und in diese im Bereich der Abdeckscheibe (212) teilweise eingesetzt ist.

8. Signalleuchte nach Anspruch 7, **dadurch gekennzeichnet,** daß das Schwenkelement (210) auf dem besagten ersten Teil (110) des Gehäuses angebracht ist und zwei seitliche Streben (218) mit kreisförmigem Profil umfaßt, in die zwei vertikale Schlitze (218a) eingearbeitet sind, wobei der besagte erste Teil (110) des Gehäuses Anordnungen (119) für das Einschrauben von Kopfschrauben (140) umfaßt, die durch die besagten Schlitze hindurchgehen, um dadurch wahlweise die Arretierung der besagten Streben zwischen den jeweiligen Schraubenköpfen und den besagten Anordnungen in der gewünschten Winkelposition herbeizuführen.

9. Signalleuchte nach Anspruch 8, **dadurch gekennzeichnet,** daß die besagten kreisbogenförmigen Streben (218) auf die besagte Achse (A) zentriert sind.

10. Signalleuchte nach einem der Ansprüche 7 bis 9, **dadurch gekennzeichnet,** daß die besagte Abdeckscheibe (212) zwischen zwei gebogenen Teilen (212a, 212b) des Schwenkelements (210) vorgesehen ist, die auf die besagte Achse zentriert sind und sich horizontal in der Nähe von geradlinigen Ober- und Unterkanten der besagten Öffnung (114a) der Trennwand (114) erstrecken.
